# EUROPÄISCHE PATENTSCHRIFT

(11) **EP 1 609 229 B1**
(45) Veröffentlichungstag und Bekanntmachung des Hinweises auf die Patenterteilung: **20.06.2007**
(21) Anmeldenummer: 04721179.2
(22) Anmeldetag: 17.03.2004
(51) Int. Cl.: H02K 5/26, H02K 5/04

(54) **MONTAGE EINES MOTORS AN EINEM TRÄGER**
MOUNTING A MOTOR ON A CARRIER
MONTAGE D'UN MOTEUR SUR UN SUPPORT

(30) Priorität: 21.03.2003 DE 20304565 U
(43) Veröffentlichungstag der Anmeldung: 28.12.2005
(73) Patentinhaber: BSH Bosch und Siemens Hausgeräte GmbH, 81739 München (DE)
(72) Erfinder: RAAB, Alfred, 73460 Hüttlingen (DE); AZCONA, Pastor Vicente, E-31370 Falces (ES); BECKE, Christoph, 83109 Grosskarolinenfeld (DE); JANSSEN, Hans Reinhart, 89537 Giengen (DE)
(86) Internationale Anmeldenummer: PCT/EP2004/002776
(87) Internationale Veröffentlichungsnummer: WO 2004/084380

(56) Entgegenhaltungen:
- EP-A- 1 197 713
- US-A- 3 983 429
- US-A- 5 488 259
- PATENT ABSTRACTS OF JAPAN Bd. 1999, Nr. 03, 31. März 1999 (1999-03-31) -& JP 10 322967 A (ASMO CO LTD), 4. Dezember 1998 (1998-12-04)
- PATENT ABSTRACTS OF JAPAN Bd. 1996, Nr. 06, 28. Juni 1996 (1996-06-28) -& JP 08 047195 A (TANASHIN DENKI CO), 16. Februar 1996 (1996-02-16)

## Beschreibung

Die vorliegende Erfindung betrifft eine Motoranordnung für die Montage eines Motors, insbesondere eines Elektromotors, an einem Träger, sowie ein elektrisches Gerät, in dem eine solche Motoranordnung angewendet ist.

Um einen Motor an einem Träger, z.B. in einem Gerätegehäuse wirtschaftlich und sicher zu montieren, ist im Allgemeinen eine spezielle Anpassung des Trägers an die Gestalt des Motorgehäuses erforderlich, die eine Verrastung, Verschraubung oder andere Art von Befestigung des Motors an dem Träger mit wenigen Handgriffen oder durch einen Montageautomaten ermöglicht. Dabei ergibt sich für einen Gerätehersteller, der solche Motoren in seine Geräte einbaut, häufig das Problem, dass, um eine Abhängigkeit von einem einzigen Zulieferer zu vermeiden, es möglich sein soll, von unterschiedlichen Zulieferern gefertigte Motoren indifferent zu verbauen, sei es, indem Motoren unterschiedlicher Hersteller jeweils in unterschiedlichen Gerätemodellen eingesetzt werden, oder indem innerhalb einer Serienfertigung eines gleichen Gerätemodells Motoren unterschiedlicher Herkunft verwendet werden. Häufig unterscheiden sich diese Motoren geringfügig in Gestalt und Abmessungen, so dass ein Träger, der speziell an ein bestimmtes Motorfabrikat angepasst ist, für ein zweites unbrauchbar sein kann. Dies zwingt den Gerätehersteller, je nach Motorfabrikat unterschiedliche Träger einzusetzen. D.h., wenn der Träger das Gehäuse des herzustellenden Geräts selber ist, können so viel unterschiedliche Gehäusetypen erforderlich sein, wie Motorfabrikate verwendet werden sollen. Die hohen Kosten, die mit der Herstellung unterschiedlicher Formwerkzeuge für die Herstellung der Gehäuse sowie mit der Bereitstellung unterschiedlicher Gehäusetypen verbunden sind, machen eine solche Vorgehensweise unwirtschaftlich.

Gleichartige Probleme ergeben sich, wenn bei laufender Fertigung eines Gerätes das verwendete Motormodell durch ein neu entwickeltes, vorteilhafteres mit geringfügig abweichender Gehäusegestalt ersetzt werden soll.

Diese Probleme lassen sich ein Stück weit lindern, wenn anstelle unterschiedlicher Modelle von Trägern ein einheitlicher Träger und unterschiedliche Modelle von Montageklammern verwendet werden, die jeweils spezifisch gefertigt sind, um ein bestimmtes Motorfabrikat sicher zu halten, und die allesamt einheitliche Befestigungsmittel für die Befestigung an dem einheitlichen Träger aufweisen.

Der wirtschaftliche Vorteil resultiert hier nur daraus, dass eine solche Montageklammer im Allgemeinen kleiner und preiswerter zu fertigen ist als der Träger, mit dem sie den Motor verbindet, und dass deshalb die mit der Herstellung unterschiedlicher Typen von Montageklammern verbundenen Kosten geringer sind, als wenn unterschiedliche Träger gefertigt werden müssen. Das Problem, dass unterschiedliche Typen von Montageklammern bereitgehalten und jeweils passend zum zu montierenden Motor ausgewählt werden müssen, wird dadurch jedoch nicht gelöst.

US 3,983,429 A1, der nächste Stand der Technik, zeigt eine Motoranordnung für die Montage eines Motors an einem Träger, die den Motor und eine an dem Motor befestigte und mit Mitteln zur Befestigung an dem Träger versehene Montageklammer umfasst, wobei der Motor ein Gehäuse aufweist, von dem Wellenansätze vorstehen und die Montageklammer zwei sich beiderseits einer Aufnahmehöhlung für den Elektromotor gegenüberliegende Flanken, in denen jeweils eine Aussparung zum Aufnehmen eines der Wellenansätze des Motors gebildet sind, aufweist.

Aufgabe der vorliegenden Erfindung ist, eine Motoranordnung für die Montage eines Motors an einem Träger anzugeben, die auf einfache Weise und mit einheitlichen Teilen die Montage unterschiedlicher Motorfabrikate mit in Maßen unterschiedlichen Abmessungen und Gehäuseformen erlaubt.

Die Aufgabe wird gelöst durch eine Motoranordnung mit den Merkmalen des Anspruchs 1.

Indem erfindungsgemäß die Flanken der Montageklammer den Motor jeweils an dessen Wellenansätzen unterstützen, wird die Welle des Motors selbst wirksam räumlich fixiert, ohne dass hierfür die Gestalt des Motorgehäuses abseits von den Wellenansätzen exakt festgelegt sein muss. Um zu verhindern, dass ein Drehmoment des Motors dessen Gehäuse selbst zum Rotieren bringt, ist ein Kontakt zwischen der Montageklammer und dem Motorgehäuse noch an einer geeigneten Stelle abseits von der Welle erforderlich. Arme der Montageklammer, die einen solchen drehblockierenden Kontakt zum Motorgehäuse herstellen, sind elastisch, um sich Abweichungen der Gehäuseabmessungen von einem Motorfabrikat zum anderen anpassen zu können.

Vorzugsweise berühren diese zwei Arme den Motor an zwei Punkten, deren gedachte Verbindungslinie quer zur Drehachse des Motors und beabstandet von dieser verläuft. Da die Arme elastisch sind, blockieren sie eine Drehung des Motors nicht absolut, sondern geben einem Drehmoment des Motors ein Stück weit nach. Dabei ist das Ausmaß, in dem die Arme nachgeben, bei gegebener Federkonstante der Arme um so kleiner, je größer der Abstand der Berührungspunkte bzw. ihrer Verbindungslinie von der Drehachse ist.

Eine große Stabilität der Montageklammer wird erreicht, wenn die den Wellenansatz des Motors aufnehmenden Flanken mit parallel zu dessen Drehachse orientierten Flanken zu einem den Motor umlaufenden Rahmen verbunden sind. Vorzugsweise stehen die die Drehbewegung blockierenden Arme von den achsparallelen Flanken des Rahmens ab.

Vorteilhaft ist auch, wenn die Arme eine Spitze aufweisen, auf die ein Ring aus einem flexiblen Material gesteckt ist. Es ist dann eine Oberfläche des Rings, die das Gehäuse des Motors berührt. Um auch bei stärkeren Abweichungen in den Abmessungen des Motorgehäuses den Motor sicher fixieren zu können, ist der Ring vorzugsweise austauschbar, so dass je nach Motorabmessungen Ringe unterschiedlicher Dicke ausgewählt werden können.

Um eine schnelle Montage des Motors in der Montageklammer zu ermöglichen, ist an der Montageklammer wenigstens eine der einen Wellenaufsatz aufnehmenden Aussparungen zu einem Rand der Flanke hin, in der sie gebildet ist, offen. Die zweite Aussparung kann geschlossen sein, in dem Fall muss zum Montieren des Motors dieser mit schräg zu einer durch die zwei Aussparungen definierten Richtung orientierter Welle in die geschlossene Aussparung eingeführt und dann geschwenkt werden, um den zweiten Wellenansatz in die randoffene Aussparung einzuführen. Vorzugsweise sind beide Aussparungen randoffen, so dass der Motor durch eine einfache Translation in der Montageklammer platziert werden kann.

Ein randnaher Eingangsbereich der Aussparung ist zweckmäßigerweise von zwei flexiblen Armen begrenzt, die beim Einführen des Wellenansatzes von der Seite her in die Aussparung nachgeben und, sobald der Wellenansatz sie passiert hat, in ihre entspannte Stellung zurückkehren können, in der sie den Wellenansatz daran hindern, die Aussparung wieder zu verlassen. Diese flexiblen Arme sind zweckmäßigerweise in Höhe des Randes der Flanke mit dieser verbunden und erstrecken sich von dort ins Innere der Aussparung hinein.

Um bei geringem Materialaufwand eine hohe Steifigkeit der Montageklammer zu gewährleisten, sind deren Flanken vorzugsweise mit Versteifungsrippen versehen.

Eine Montageklammer wie oben beschrieben ist in einer Vielzahl von elektrischen Geräten verwendbar; eine bevorzugte Anwendung ist die Montage eines Motors für ein Gebläse in einem Kältegerät.

Weitere Merkmale und Vorteile der Erfindung ergeben sich aus der nachfolgenden Beschreibung eines Ausführungsbeispiels mit Bezug auf die beigefügten Figuren. Es zeigen:
- Fig. 1: eine perspektivische Ansicht von oben einer kombinierten Beleuchtungs- und Gebläse-Baugruppe zum Einbau in einem Kältegerät;
- Fig. 2: einen Teilschnitt durch das Kältegerät und die darin eingebaute Baugruppe in einer ersten, langgestreckten Konfiguration;
- Fig. 3: einen weiteren Teilschnitt mit der gleichen Baugruppe, diesmal in einer zweiten, verkürzten Konfiguration;
- Fig. 4: eine Ansicht der Baugruppe in der langgestreckten Konfiguration von unten;
- Fig. 5: eine perspektivische Ansicht der Haube der Baugruppe;
- Fig. 6: eine auseinandergezogene Darstellung des ersten Gehäuseteils, die die Haube und einen Teil des Basisteils zeigt;
- Fig. 7: eine auseinandergezogene Darstellung des zweiten Gehäuseteils und darin aufgenommener Gebläsekomponenten; und
- Fig. 8: eine vergrößerte Ansicht einer Montageklammer aus Fig. 7.

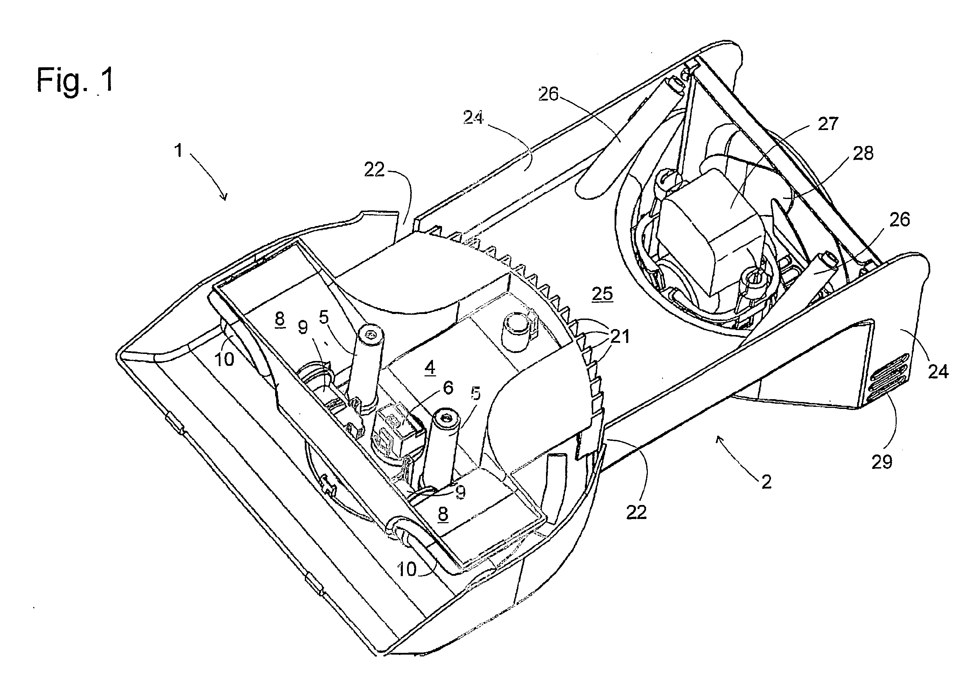

Fig. 1 zeigt eine perspektivische Ansicht einer kombinierten Beleuchtungs- und Gebläse-Baugruppe, die zur Montage unter der Decke des Innenraums eines Kältegeräts vorgesehen ist. Die Baugruppe umfasst ein erstes Gehäuseteil 1 und ein zweites Gehäuseteil 2, die untereinander nicht fest verbunden sind, sondern jedes für sich an der Decke des Innenraums des Kältegeräts befestigt sind. Zum ersten Gehäuseteil 1 gehört ein Basisteil 3, das zur unmittelbaren Befestigung an der Decke vorgesehen ist. In der Figur blickt man von hinten in einen in etwa T-förmigen, hohlen erhabenen Abschnitt 4 des Basisteils 3. In einer Kernzone des erhabenen Abschnitts 4 sind zwei Schraubenschäfte 5 geformt, die vorgesehen sind, um von unten her eine (nicht dargestellte) Schraube aufzunehmen, mit der das Basisteil 3 an der Decke festgeschraubt wird. Zwischen den zwei Schraubenschäften 5 befindet sich ein Bajonettkupplungselement 6, das dazu dient, in später noch genauer zu erläuternder Weise eine Haube 7 zu befestigen, die das Basisteil 3 überdeckt.

Durch zwei schräge Flanken 8 des erhabenen Abschnitts 4 hindurch erstreckt sich jeweils eine Schraubfassung 9, die eine Glühlampe 10 oder ein anderes geeignetes Leuchtmittel hält. Die vom Betrachter abgewandte Außenseite der Flanken 8 kann mit einem metallischen Reflektor in Form eines dünnen Blechs oder einer aufgeklebten Folie versehen sein, um die Lichtabstrahlung zu verbessern und die Flanke 8 vor Überhitzung durch die Glühlampe 10 zu schützen.

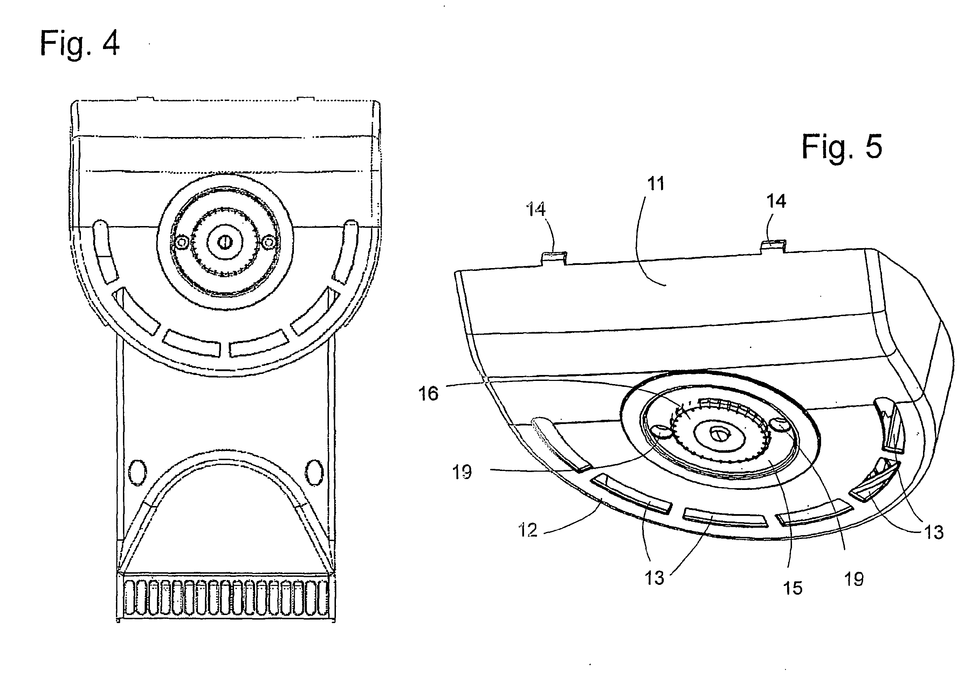

Fig. 5 zeigt eine perspektivische Ansicht der Haube 7 schräg von vorne und von unten, in der Perspektive, in der sie auch in einem Kältegerät eingebaut sichtbar ist. Die Haube hat einen in etwa prismenförmigen vorderen Abschnitt 11, in dem die Glühlampen 10 aufgenommen sind, und einen flachen halbzylindrischen hinteren Abschnitt 12. An der Unterseite des hinteren Abschnitts 12 ist eine Reihe von Belüftungsschlitzen 13 gebildet. Vorspringende Zapfen 14 am oberen Rand der Haube verhindern ein enges Anliegen der Haube 7 an der Decke des Innenraums des Kältegeräts. So werden einerseits zusätzliche Belüftungsschlitze zwischen dem Rand der Haube und der Decke erzeugt, andererseits wird durch den Abstand zwischen Haube und Decke erreicht, dass geringe Formunterschiede zwischen beiden, die auf Toleranzen bei der Herstellung des Kühlschrankinnenbehälters zurückgehen können, einem Betrachter nicht auffallen.

Eine drehbare Kappe 15 ist in eine zentrale Öffnung der Haube 7 eingefügt. An ihrer Außenseite weist die Kappe 15 einen flachen runden Handhabungsknopf 16 mit aufgerautem Rand auf, der es einem Benutzer einfach macht, die Kappe 15 zu drehen.

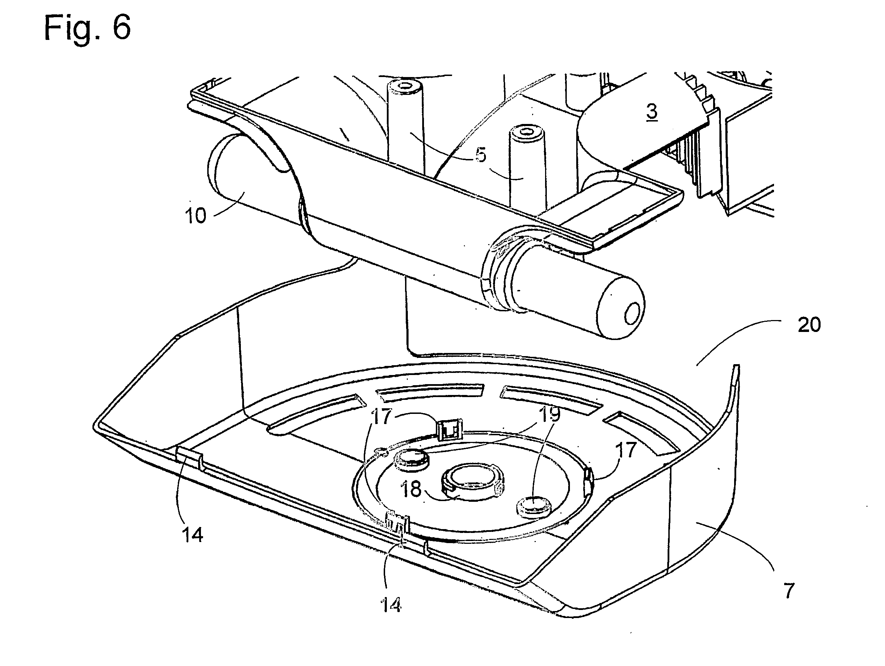

Fig. 6 zeigt, wieder in einer Perspektive schräg von oben, einen vorderen Bereich des Basisteils 3 und die Haube 7 in voneinander getrenntem Zustand. Man erkennt an der Innenseite der drehbaren Kappe 15 vorstehende, den Rand der Haube 7 hintergreifende Rasthaken 17, die die Kappe 15 in der Öffnung der Haube 7 drehbeweglich halten. In der Mitte der Kappe 15 steht ein Bajonettkupplungselement 18 vor. In einer ersten Drehstellung der Kappe 15 ist das Bajonettkupplungselement 18 in das komplementäre Bajonettkupplungselement 6 des Basisteils 3 einführbar, und durch Drehen der Kappe 15 in eine zweite Stellung ist es am Basisteil 3 verriegelbar.

Die Figuren 5, 6 zeigen jeweils die Kappe 15 in ihrer verriegelten Orientierung. In dieser Orientierung fluchten zwei Öffnungen 19 der Kappe 15 mit den Schraubenschäften 5 des Basisteils. Dadurch ist es möglich, dass erste Gehäuseteil 1 vor seinem Einbau in das Kältegerät komplett vorzumontieren und mit Hilfe von durch die Öffnungen 19 in die Schäfte 5 eingeführten Schrauben das Basisteil an der Decke des Innenraums eines Kältegeräts zu montieren, ohne dafür die Haube 7 wieder lösen zu müssen.

In einem rückwärtigen Bereich der Haube 7 ist ein großflächiger Ausschnitt 20 gebildet. Im montierten Zustand der Haube greifen in diesen Ausschnitt 20 Lamellen 21 ein, die am Basisteil 3 vertikal nach unten abstehend angeformt sind. Die Lamellen 21 sind nur an ihrem oberen Ende mit dem Basisteil 3 verbunden; ihre unteren Enden sind unverbunden, so dass das Basisteil 3 zusammen mit den Lamellen 21 mit einfachen Formwerkzeugen spritzgeformt werden kann.

Die Lamellen 21 füllen den Ausschnitt 20 nicht auf seiner ganzen Breite und Höhe aus. So ergibt sich, wenn Basisteil 3 und Haube 7 zusammengefügt sind, an der Rückseite des ersten Gehäuseteils 1 ein Spalt mit in etwa C-förmigem Querschnitt entlang der Ränder des Ausschnitts, in den das entsprechend diesem Querschnitt geformte zweite Gehäuseteil 2 einführbar und innerhalb bestimmter Grenzen in seiner Längsrichtung verschiebbar ist.

Fig. 1 zeigt das zweite Gehäuseteil 2 mit unmittelbar vor dem von dem Ausschnitt 20 und den Lamellen 21 begrenzten C-förmigen Spalt 22 platzierter vorderer Kante. Das zweite Gehäuseteil 2 hat L-förmige Seitenwände 24, deren Außenkanten jeweils geformt sind, um sich in ihrem oberen, horizontalen Bereich an die Decke und in ihrem hinteren, vertikalen Bereich an die Rückwand des Innenraums des Kühlschranks formschlüssig anzuschmiegen. Von einer die Seitenwände 24 verbindenden horizontalen Decke 25 gehen schräg orientierte Schraubenschäfte 26 aus, die zur Befestigung des Gehäuseteils 2 an der Decke des Innenbehälters dienen. In einem vorderen Bereich bildet das Gehäuseteil 2 einen hohlen Kanal von flach rechteckigem Querschnitt, der mit einer variablen Tiefe in den Spalt 22 des ersten Gehäuseteils einschiebbar ist. In einem hinteren Bereich ist das Gehäuseteil 2 nach unten erweitert, um ein Gebläse mit einem Elektromotor 27 und einem durch den Elektromotor 27 angetriebenen Flügelrad 28 aufzunehmen. Wenn das Gebläse in Betrieb ist, treibt es eine Luftströmung an, die Luft aus dem ersten Gehäuseteil 1 absaugt und durch der Rückwand des Innenraums benachbarte Schlitze 29 des zweiten Gehäuseteils 2 wieder ausstößt, um so eine Luftströmung entlang der durch einen Verdampfer gekühlten Rückwand des Innenraums zu erzeugen.

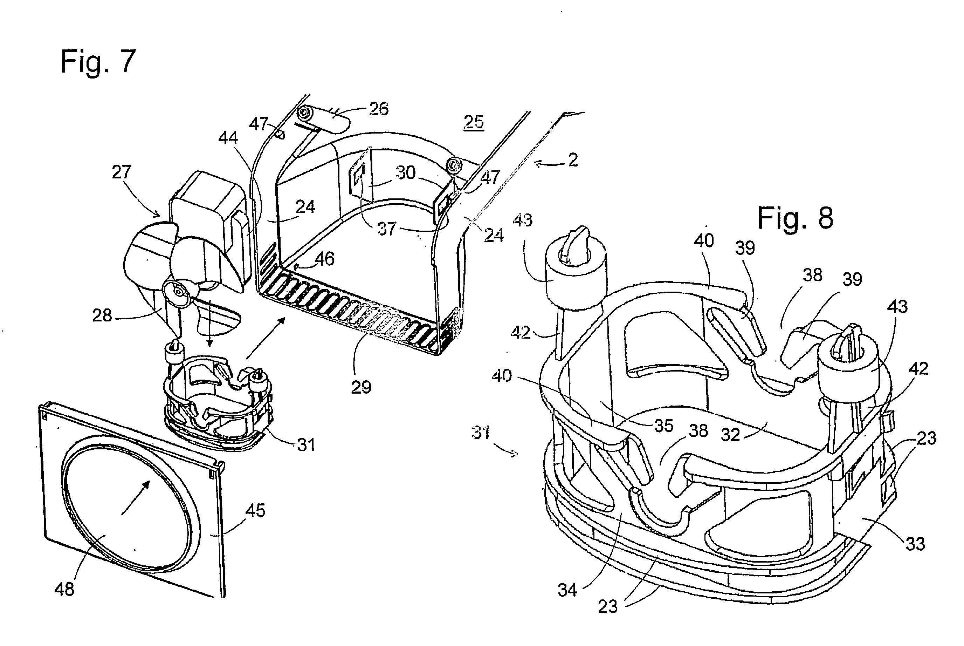

Der innere Aufbau des zweiten Gehäuseteils wird anhand der Figuren 7 und 8 genauer erläutert. Fig. 7 zeigt, schräg von oben und hinten gesehen, eine auseinandergezogene Teilansicht des zweiten Gehäuseteils 2 und darin eingebauter Komponenten. Zwei parallele Haltelaschen 30 sind an eine Innenwand des Gehäuseteils 2 angeformt. Sie sind vorgesehen, um eine in Fig. 8 vergrößert gezeigte Montageklammer 31 zu halten. Die einteilig aus Kunststoff geformte Montageklammer 31 hat vier sich paarweise gegenüberliegende, über abgerundete Ecken miteinander verbundene Flanken 32 bis 35. An ebene Außenseiten der Flanken 33, 35 ist jeweils ein Rastkeil 36 angeformt, der, wenn die Montageklammer 31 zwischen die Haltelaschen 30 eingeführt ist, in eines von deren Fenstern 37 eingreift und so die Montageklammer 31 am Gehäuseteil 2 verrastet.

ln den sich gegenüberliegenden langen Flanken 32, 34 ist jeweils eine nach oben hin offene Aussparung 38 gebildet. Ein Eingangsbereich der Aussparungen 38 ist durch zwei von oben nach unten aufeinander zulaufende Arme 39 begrenzt, die mit dem Rest der Flanke 32, 34 nur durch schmale Stege in Höhe von deren oberer Kante 40 verbunden und infolgedessen flexibel auslenkbar sind. In einem unteren Bereich der Aussparung 38 ist eine halbkreisförmige Rundung 41 gebildet. Deren Durchmesser ist so bemessen, dass sie einen Wellenansatz des Elektromotors 27, der von oben her in die Montageklammer 31 hineingedrückt wird, formschlüssig aufnimmt. Die beim Hineindrücken des Motors in die Montageklammer 31 ausgelenkten Arme 39 kehren in ihre in der Fig. 8 gezeigte entspannte Stellung zurück, sobald der Wellenansatz sie passiert hat, und hindern so den Motor 27 daran, aus der Montageklammer 31 nach oben zu entweichen. Auf diese Weise wird die Welle des Motors 27 unabhängig von dessen exakten Gehäuseabmessungen sicher fixiert. Lediglich der Durchmesser des Wellenansatzes des Motors 27 muss innerhalb gewisser Toleranzen an die Abmessungen der Aussparung 38 angepasst sein.

Um eine Auslenkung der Arme 39 in Richtung der Achse des Motors 27, durch die der Motor aus der Montageklammer 31 freikommen konnte, zu verhindern, ist die obere Kante 40 der Flanken 32, 34. durch in Richtung der Achse des Motors vorspringende Rippen versteift. Entsprechende Rippen 23 sind auch unterhalb der Aussparung 38 an den Flanken 32, 34 gebildet.

Um auch eine Drehung des Motors 27 um seine eigene Achse zu verhindern, ist die Montageklammer 31 mit zwei flexiblen Armen 42 versehen, die von den zur Achse des Motors 27 parallelen Flanken 33, 35 nach oben abstehen. Hinter einer verbreiterten Spitze der Arme 42 ist jeweils ein Gummiring 43 eingerastet. Im entspannten Zustand sind die Gummiringe 43 kreisrund. Die Verbreiterung an den Spitzen der Arme 42 ist so bemessen, dass die Gummiringe 43 durch sie in ihrer entspannten Stellung zurückgehalten werden, dass sie aber, wenn sie an den Armen 42 flach gedrückt werden, von den Vorsprüngen freikommen und ohne Widerstand nach oben abgezogen und durch Ringe mit einer anderen Wandstärke ersetzt werden können.

Wenn der Elektromotor 27 in der Montageklammer 31 platziert ist, berühren die einander zugewandten Oberflächen der Gummiringe 43 die seitlichen Flanken eines Statorpakets 44 des Motors. Aufgrund der Elastizität der Arme und der Gummiringe 43 ist es ohne Schwierigkeiten möglich, Motoren sicher in der Montageklammer 31 zu verankern, die sich in der Breite ihrer Statorpakete um mehrere Millimeter unterscheiden. Noch größere Toleranzen in den Abmessungen können durch entsprechenden Austausch der Gummiringe 43 aufgefangen werden.

Der Arbeitsaufwand für die Montage des Elektromotors 27 in dem Gehäuseteil 2 ist minimal: es genügt, den Motor in den Aussparungen 38 der Montageklammer 31 und die Montageklammer 31 in den Haltelaschen 30 des Gehäuseteils 2 zu verrasten.

Wenn das Gebläse montiert ist, wird noch eine Blende 45 an Rastvorsprüngen 46, 47 des Gehäuseteils 2 eingehakt. Die Blende 45 hat ein kreisrundes zentrales Fenster 48, dessen Durchmesser dem des Flügelrades 28 entspricht. Sie verhindert, dass von dem Gebläse gegen die Rückwand des Kältegeräts geblasene Luft innerhalb des Gehäuseteils 2 an dem Flügelrad 28 vorbei wieder nach vorne strömt und verbessert so den Wirkungsgrad des Gebläses.

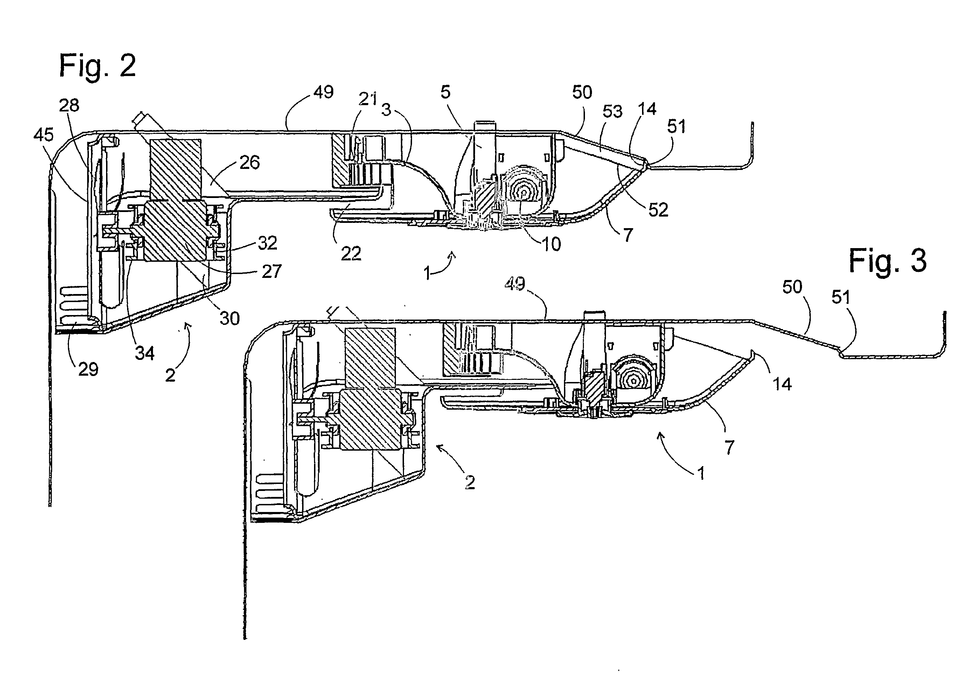

Die Figuren 2 und 3 zeigen zwei Schnitte durch die zwei Gehäuseteile 1, 2 und ihre Einbauten, unter der Decke 49 des Innenbehälters eines Kältegeräts montiert. Fig. 2 zeigt eine weite auseinandergezogene Konfiguration, bei der der vordere Bereich des zweiten Gehäuseteils 2 nur wenig in das erste Gehäuseteil 1 eindringt. Die Decke 49 weist im türnahem Bereich einen geneigten Abschnitt 50 mit einer Stufe 51 auf. Die Position des ersten Gehäuseteils 1 ist festgelegt durch einen Kontakt der Zapfen 14 der Haube 7 mit der Stufe 51. Die dem geneigten Abschnitt 50 zugewandte Oberkante 52 der Haube 7 ist parallel zu dem geneigten Abschnitt 50, und zwischen beiden befindet sich ein Lüftungsspalt 53.

Fig. 3 zeigt die zwei Gehäuseteile in einer zusammengeschobenen Konfiguration, in der das zweite Gehäuseteil 2 weit in das erste Gehäuseteil 1 eingreift. Die Zapfen 14 sind hier von der Stufe 51 der Decke 49 abgerückt, so dass ein sehr großflächiger Lufteintrittsspalt entsteht. Da die zwei Gehäuseteile 1, 2 stufenlos, teleskopisch, gegeneinander verschiebbar sind, kann der Querschnitt des Lüftungsspalts flexibel an den Bedarf angepasst werden.

Der besondere Nutzen der teleskopischen Verschiebbarkeit der Gehäuseteile 1, 2 liegt allerdings darin, dass sie in unterschiedlich weit zusammengeschobenen Konfigurationen für den Einbau in Kältegeräten mit unterschiedlichen Tiefen des Innenraums ohne Anpassung verwendbar sind.

## Patentansprüche

1. Motoranordnung für die Montage eines Motors (27) an einem Träger (2), die den Motor (27) und eine an dem Motor (27) befestigte und mit Mitteln zur Befestigung an dem Träger versehene Montageklammer (31) umfasst, wobei der Motor (27) ein bezüglich seiner Drehachse unrundes Gehäuse aufweist, von dem Wellenansätze vorstehen und die Montageklammer (31) zwei sich beiderseits einer Aufnahmehöhlung für den Elektromotor gegenüberliegende Flanken (32, 34), in denen jeweils eine Aussparung (38) zum Aufnehmen eines der Wellenansätze des Motors (27) gebildet sind, und elastisch den Motor (27) berührende Arme (42) aufweist, die angeordnet sind, um eine Drehung des Motors (27) um seine Drehachse zu blockieren.

2. Motoranordnung nach Anspruch 1, **dadurch gekennzeichnet, dass** die zwei Arme den Motor (27) an zwei Punkten berühren, deren gedachte Verbindungslinie quer zur Drehachse des Motors und beabstandet von dieser verläuft.

3. Motoranordnung nach Anspruch oder 2, **dadurch gekennzeichnet, dass** die den Wellenansatz aufnehmenden Flanken (33, 34) mit parallel zu der Drehachse orientierten Flanken (33, 35) zu einem den Motor (27) umlaufenden Rahmen verbunden sind, und dass die Arme (42) von den achsparallelen Flanken (33, 35) abstehen.

4. Motoranordnung nach einem der vorhergehenden Ansprüche, **dadurch gekennzeichnet, dass** die Arme (42) eine Spitze aufweisen, auf die ein Ring (43) aus einem flexiblen Material aufgesteckt ist.

5. Motoranordnung nach Anspruch 4, **dadurch gekennzeichnet, dass** der Ring (43) austauschbar ist.

6. Motoranordnung nach einem der vorhergehenden Ansprüche, **dadurch gekennzeichnet, dass** wenigstens eine der Aussparungen (38) zu einem Rand der Flanke (32, 34) hin, in der sie gebildet ist, offen ist.

7. Motoranordnung nach Anspruch 6, **dadurch gekennzeichnet, dass** ein randnaher Eingangsbereich der Aussparung (38) von zwei flexiblen Armen (39) begrenzt ist.

8. Motoranordnung nach Anspruch 7, **dadurch gekennzeichnet, dass** die flexiblen Arme (39) in Höhe des Randes (40) mit der Flanke verbunden sind und sich ins Innere der Aussparung (38) hinein erstrecken.

9. Motoranordnung nach einem der vorhergehenden Ansprüche, **dadurch gekennzeichnet, dass** die Flanken (32, 33, 34, 35) Versteifungsrippen aufweisen.

10. Elektrisches Gerät, insbesondere Kältegerät, **gekennzeichnet durch** eine Motoranordnung nach einem der vorhergehenden Ansprüche.

11. Kältegerät mit einem von einem wärmeisolierenden Gehäuse umschlossenen Innenraum, **dadurch gekennzeichnet, dass** ein Gebläse (28) mit einer Motoranordnung nach einem der vorhergehenden Ansprüche in dem Innenraum montiert ist.

## Claims

1. Motor arrangement of a mounting of a motor (27) on a support (2), which comprises the motor (27) and a mounting clip (31) fastened to the motor (27) and provided with means for fastening to the support, wherein the motor (27) comprises a housing which is non-circular with respect to its rotational axis and from which shaft extensions protrude, the mounting clip (31) having two flanks (32, 34), which are disposed opposite on either side of a receiving cavity for the electric motor and in each of which a respective cut-out (38) for reception of one of the shaft extensions of the motor (27) is formed, and resilient arms (42), which contact the motor (27) and are arranged to block rotation of the motor (27) about its rotational axis.

2. Motor arrangement according to claim 1, **characterised in that** the two arms contact the motor (27) at two points, the notional connecting line of which extends transversely to the rotational axis of the motor and at a spacing therefrom.

3. Motor arrangement according to claim 1 or 2, **characterised in that** the flanks (33, 34) receiving the shaft extension are connected with flanks (33, 35), which are oriented parallel to the rotational axis, to form a frame encircling the motor (27), and that the arms (42) protrude from the axially parallel flanks (33, 35).

4. Motor arrangement according to one of the preceding claims, **characterised in that** the arms (42) have a tip onto which a ring (43) of a flexible material is plugged.

5. Motor arrangement according to claim 4, **characterised in that** the ring (43) is exchangeable.

6. Motor arrangement according to one of the preceding claims, **characterised in that** at least one of the cut-outs (38) is open towards an edge of the flank (32, 34) in which it is formed.

7. Motor arrangement according to claim 6, **characterised in that** an entry region, which is near the edge, of the cut-out (38) is bounded by two flexible arms (39).

8. Motor arrangement according to claim 7, **characterised in that** the flexible arms (39) are connected with the flanks at the level of the edge (40) and extend into the interior of the cut-out (38).

9. Motor arrangement according to one of the preceding claims, **characterised in that** the flanks (32, 33, 34, 35) have reinforcing ribs.

10. Electrical appliance, particularly refrigerating appliance, **characterised by** a motor arrangement according to one of the preceding claims.

11. Refrigerating appliance with an interior space surrounded by a thermally insulating housing, **characterised in that** a fan (28) together with a motor arrangement according to one of the preceding claims is mounted in the interior space.

## Revendications

1. Agencement de moteur pour le montage d'un moteur (27) sur un support (2), qui comprend le moteur (27) et un clip de montage (31) fixé sur le moteur (27) et muni de dispositifs pour la fixation sur le support, le moteur (27) présentant un carter ovalisé par rapport à son axe de rotation, duquel carter dépassent des bouts d'arbre, et le clip de montage (31) présentant deux flancs (32, 34) s'opposant des deux côtés d'une cavité de logement pour le moteur électrique, dans lesquels un évidement (38) est respectivement formé pour loger l'un des bouts d'arbre du moteur (27), et deux bras (42) touchant le moteur (27) de manière élastique, qui sont disposés afin de bloquer une rotation du moteur (27) autour de son axe de rotation.

2. Agencement de moteur selon la revendication 1, **caractérisé en ce que** les deux bras touchent le moteur (27) à deux points, dont la ligne de liaison imaginaire s'étend transversalement par rapport à l'axe de rotation du moteur et à distance de cet axe de rotation.

3. Agencement de moteur selon la revendication 1 ou 2, **caractérisé en ce que** les flancs (33, 34) logeant le bout d'arbre sont raccordés à des flancs (33, 35) orientés parallèlement à l'axe de rotation, vers un cadre entourant le moteur (27), et **en ce que** les bras (42) dépassent des flancs (33, 35) parallèles à l'axe.

4. Agencement de moteur selon l'une quelconque des revendications précédentes, **caractérisé en ce que** les bras (42) présentent une pointe sur laquelle est emboîtée une bague (43) exécutée dans une matière flexible.

5. Agencement de moteur selon la revendication 4, **caractérisé en ce que** la bague (43) est interchangeable.

6. Agencement de moteur selon l'une quelconque des revendications précédentes, **caractérisé en ce qu'**au moins l'un des évidements (38) est ouvert vers un bord du flanc (32, 34) dans lequel il est formé.

7. Agencement de moteur selon la revendication 6, **caractérisé en ce qu'**une zone d'entrée de l'évidement (38), proche du bord, est délimitée par deux bras flexibles (39).

8. Agencement de moteur selon la revendication 7, **caractérisé en ce que** les bras flexibles (39) sont raccordés au flanc à hauteur du bord (40) et s'étendent à l'intérieur de l'évidement (38).

9. Agencement de moteur selon l'une quelconque des revendications précédentes, **caractérisé en ce que** les flancs (32, 33, 34, 35) présentent des nervures de raidissement.

10. Appareil électrique, en particulier, appareil de réfrigération, selon l'une quelconque des revendications précédentes, **caractérisé par** un agencement de moteur selon l'une quelconque des revendications précédentes.

11. Appareil de réfrigération comprenant un espace intérieur entouré d'un boîtier calorifuge, **caractérisé en ce qu'**un ventilateur (28) comprenant un agencement de moteur selon l'une quelconque des revendications précédentes est monté dans l'espace intérieur.
